# EUROPÄISCHE PATENTSCHRIFT

(11) **EP 1 243 400 B1**
(45) Veröffentlichungstag und Bekanntmachung des Hinweises auf die Patenterteilung: **05.04.2006**
(21) Anmeldenummer: 01129884.1
(22) Anmeldetag: 14.12.2001
(51) Int. Cl.: B29C 49/34, B29C 35/18, B29L 23/00

(54) **Vorrichtung zum Herstellen von Wellrohren**
Apparatus for producing corrugated pipes
Dispostif pour produire des tuyaux ondulés

(30) Priorität: 21.03.2001 DE 20104922 U
(43) Veröffentlichungstag der Anmeldung: 25.09.2002
(60) Teilanmeldung: 03029291.6
(73) Patentinhaber: Drossbach GmbH & Co. KG, 86641 Rain am Lech (DE)
(72) Erfinder: Dietrich, Karl, 86641 Rain/Lech (DE); Hurler, Michael, 86703 Rögling (DE)
(74) Vertreter: Altenburg, Udo

(56) Entgegenhaltungen:
- EP-A- 0 764 516
- DE-A- 4 338 990

## Beschreibung

Die vorliegende Erfindung betrifft eine Vorrichtung zur Herstellung von Wellrohren aus thermoplastischem Kunststoff, bei der in einem Kreislauf sich paarweise ergänzende Formbacken gemeinsam entlang einer sich an einen Spritzkopf anschließenden Formstrecke geführt, am Ende der Formstrecke auseinandergefahren und separat voneinander zu deren Anfang zurückgeführt werden, mit einer Formstreckeneinrichtung zur Bewegung der Formbacken entlang der Formstrecke und einem Rückförderer zur Rückförderung der Formbacken vom Ende der Formstrecke zu deren Anfang, wobei die Formstreckeneinrichtung einen Maschinentisch mit einer unteren Führung und unteren Antriebsmitteln für die Formbacken und einen am Maschinentisch befestigten Deckrahmen mit einer oberen Führung und oberen Antriebsmitteln für die Formbacken aufweist.

Bei solchen Wellrohranlagen vom sogenannten Shuttle-Typ werden hin- und hergehende Rückförderer verwendet. Die Rückförderer können einen Greifarm besitzen, der eine am Ende der Förmstrecke befindliche Formbacke greift, zum Anfang der Formstrecke fährt, die Formbacke dort absetzt und an die vorauseilende Formbacke aufschließt bzw. ansetzt sowie anschließend wieder an das Ende der Formstrecke fährt, um dort die nächste Formbacke zu greifen. Auf der Formstrecke selbst werden die Formbacken von separaten Antrieben, die zum einen auf dem Maschinentisch liegen und zum anderen am darüberliegenden Deckrahmen angeordnet sind, fortbewegt. Insbesondere ist es hierbei bekannt, im Maschinentisch und im darüberliegenden Deckrahmen Antriebsritzel vorzusehen, die in an den Formbacken oben und unten angeordnete Zahnstangen eingreifen und diese entsprechend vorwärts bewegen.

Die EP-A-0 764 516 offenbart eine Vorrichtung nach dem Oberbegriff des Anspruchs 1 zur Herstellung von Rohren aus thermoplastischem Kunststoff mit Querprofilierung, die auf einer Formstrecke paarweise in Kreislauf geführte Formbacken aufweist. Es ist eine Transportvorrichtung zur Rückführung der Formbacken vorgesehen, die nach Art eines Brückenkranes ausgebildet ist. Auf einer die Formstrecke übergreifenden Fransport-Brücke sind zwei quer zur Produktionsrichtung und gegensinnig zueinander verfahrbare Transport-Wagen vorgesehen, an denen jeweils ein nach unten gerichteter Transportarm mit einer Haltevorrichtung für je eine Formbacke angebracht ist.

Aus der WO-A-94 07673 ist weiter eine Wellrohranlage bekannt, bei der die Formbackenpaare in zwei Gruppen zusammengefaßt sind. Eine erste Gruppe ist auf einem Schlitten gelagert, der an einem unteren Tragrahmen hin- und herfahrbar ist. Eine zweite Gruppe von Formbacken ist an einem Schlitten gelagert, der an einem oberen Tragrahmen eines Brückenkranes hin- und herfahrbar ist. Die Formbacken sind dabei jeweils auf Laufkatzen auseinander- und zusammenfahrbar. Um die Formbacken zurückzufahren, werden sie zunächst auf den Laufkatzen auseinandergefahren, sodann wird der Schlitten mit den auseinandergefahrenen Formbacken an den Formbacken des anderen Schlittens vorbei zurück zum Anfang der Formstrecke gefahren und schließlich werden die Formbacken auf dem Schlitten wieder zusammengefahren.

Die DE-A-43 18 514 offenbart eine Vorrichtung zum Herstellen von Wellrohren aus thermoplastischem Kunststoff, die eine im Anschluss an einen Spritzkopf eines Extruders angeordnete Formstrecke aufweist, die aus einer in einem Gestell angeordneten Führung besteht, auf der in einem Einlauf paarweise zu ringförmigen Formen geschlossene Formbacken dicht aufeinanderfolgend verschoben werden, die auf ihrer Unterseite mit Zahnstangen versehen sind. In einem Auslauf werden die Formbacken voneinander getrennt und von mit Kupplungseinrichtungen versehenen Greifarmen erfaßt und von diesen wieder in den Einlauf der Formstrecke eingefügt. Die Greifarme sind durch Antriebe beweglich auf Schlitten gelagert, die auf Führungen von und zu der Formstrecke parallelen Rücklaufstrecken durch Antriebe hin- und herfahrbar sind. Um die Greifarme bei einfachem und stabilem Aufbau in einfacher Weise steuern zu können, sind diese in Führungen des Schlittens ausschließlich quer zu dessen Bewegungsbahn verfahrbar.

Die DE-A-43 38 990 offenbart eine Vorrichtung zum Herstellen von Wellrohren aus thermoplastischem Kunststoff, die eine im Anschluss an einen Spritzkopf eines Extruders angeordnete Formstrecke aufweist, die aus einer in einem Gestell angeordneten Führung besteht, auf der in einem Einlauf paarweise zu ringförmigen Formen geschlossene Formbacken dicht aufeinanderfolgend verschoben werden, die auf ihrer Unterseite mit Zahnstangen versehen sind. Im Anfangsbereich der Formstrecke sind Antriebsmittel angeordnet, die mit den Zahnstangen der zusammengeschobenen Formbacken kämmen. In einem der Formstrecke folgenden Auslauf werden die Formbacken voneinander getrennt und dann über Fördermittel zum Einlauf der Formstrecke zurückgeführt.

Die EP-A-0 007 556 offenbart eine Vorrichtung zur Herstellung von Rohren aus thermoplastischem Kunststoff mit Querprofilierung, die auf einer Formstrecke paarweise in Kreislauf geführte Formbacken aufweist. Um jeweils nur eine möglichst geringe Gesamtzahl von im Kreislauf geführten Formbacken zu benötigen, ist ein Schlitten mit einem Schwenkarm vorgesehen, an dessen freiem Ende ein Koppelorgan zur lösbaren Ankoppelung an einer Formbacke angeordnet ist.

Der vorliegenden Erfindung liegt die Aufgabe zugrunde, eine verbesserte Wellrohranlage der eingangs genannten Art zu schaffen, bei welcher das I-neingriffbringen mit den Antriebsritzeln der Formstrecke und das Ansetzen der Formbacken an die vorauseilenden Formbacken am stromaufwärtigen Ende der Formstrecke sanfter und paßgenauer stattfindet, und gleichzeitig ein effizienterer Einsatz des Portalroboters möglich ist.

Diese Aufgabe wird durch eine Vorrichtung gemäß dem gekennzeichnenden Teil des Anspruchs 1 gelöst. Die abhängigen Patentansprüche betreffen vorteilhafte Ausgestaltungen der Erfindung.

Um die Formbacken, die am Anfang der Formstrecke wieder eingeschleust werden, paßgenau mit den Antriebsritzeln in Eingriff zu bringen und dafür zu sorgen, dass die Formbacken paßgenau an die vorauseilenden Formbacken aufgeschlossen werden, ist ein separater Hilfsantrieb bzw. Einschubmittel am Maschinentisch vorgesehen. Die genannten Einschubmittel übernehmen die Formbacken, wenn diese vom Portalroboter am vorderen Ende der Formstrecke am Maschinentisch abgesetzt werden und schieben diese mit größerer Geschwindigkeit als die vorauseilenden Formbacken in Vorschubrichtung.

In Weiterbildung der Erfindung umfassen die am Anfang der Formstrecke vorgesehenen Einschubmittel eine Dämpfungseinrichtung, die den Stoß beim Aufschließen der rückgeführten Formbacken an die vorauseilenden Formbacken dämpft. Besonders vorteilhaft ist es, wenn die Einschubmittel von mehreren Pneumatikzylindern gebildet werden, deren Kolbenstangen die Formbacken gegen die vorauseilenden Formbacken drücken. Die Pneumatikzylinder besitzen eine integrierte Dämpfung bereits aufgrund des verwendeten Druckmittels Luft. Hierdurch kann ein sanftes Aufschließen der rückgeführten Formbacken erzielt werden.

Vorzugsweise ist jeder der Greifarme relativ zu dem Portal bzw. dem daran gelagerten Schlitten mittels eines Hubantriebes höhenverstellbar, so daß die gegriffenen Formbacken im wesentlichen senkrecht vom Maschinentisch abgehoben werden können. Im Gegensatz zum Stand der Technik muß zum Abheben nicht der Schlitten nach außen gefahren werden, vielmehr kann der Formbacken unabhängig von den weiteren Bewegungsachsen des Portalroboters angehoben werden. Dies erlaubt es, unterschiedlich hohe Formbacken problemlos zu greifen. Die Formbacken können daher vorteilhafterweise an ihrer Oberseite im wesentlichen an einer durch den Schwerpunkt der jeweiligen Formbacke gehende Achse gegriffen werden, so daß keinerlei Dreh- und Kippmomente auf den Greifarm und den darüberliegenden Schlitten wirken.

In Weiterbildung der Erfindung ist eine elektronische Koppelung zwischen dem als Portalroboter ausgeführten Rückförderer und der Formstreckeneinrichtung vorgesehen, die die jeweilige Stellung der mobilen Formstreckeneinrichtung relativ zu dem Portalroboter berücksichtigt. Vorzugsweise ist eine Positionserfassungseinrichtung zur Erfassung der Relativposition von Maschinentisch und Rückförderer sowie eine mit der Positionserfassungseinrichtung verbundene zentrale Steuereinrichtung vorgesehen, die die Formstreckeneinrichtung und den Rückförderer in Abhängigkeit der erfaßten Ausrichtung zueinander ansteuert. Diese elektronische Koppelung ersetzt eine mechanische Koppelung von Rückförderer und Maschinentisch.

Vorzugsweise ist die Formstreckeneinrichtung entlang einer vorgegebenen Achse, insbesondere entlang in die Bodenplatte eingelassener Schienen, verfahrbar. Die Positionserfassungseinrichtung kann dementsprechend einachsig ausgebildet sein. Vorzugsweise sind Absolutwertgeber vorgesehen, die einerseits die Stellung des Maschinentischs und daran befestiger Aufbauten und andererseits die Stellung des Portals, das sich parallel zu dem Maschinentisch verfahren läßt, angeben. Ferner kann ein Absolutwertgeber zur Erfassung der Position bzw. Stellung des Formbacken-Hauptantriebs auf dem Maschinentisch vorgesehen sein. Die Absolutwertgeber haben den Vorteil, daß auch nach einem Stromausfall stets die korrekten Positionsdaten zur Verfügung stehen und kein neues Einjustieren notwendig ist.

Um die Formstreckeneinrichtung besser transportabel zu machen, kann vorgesehen sein, daß der über dem Maschinentisch angeordnete Deckrahmen mit der oberen Führung und den oberen Antriebsmitteln für die Formbacken zum Maschinentisch hin eine Transportstellung absenkbar ist. Hierdurch wird die Höhe der über dem Maschinentisch befindlichen Aufbauten beträchtlich reduziert. Vorzugsweise ist der Deckrahmen auf vier am Maschinentisch befestigen Säulen gelagert, die motorisch angetrieben teleskopierbar, insbesondere in die genannte Transportstellung absenkbar sind.

Um die Anpassung der Formstreckeneinrichtung an verschieden große Formbacken zu erleichtern und es insbesondere zu ermöglichen, daß unterschiedlich hohe Formbacken verwendet werden, kann der Deckrahmen unabhängig von der genannten Absenkbarkeit in die Transportstellung zusammen mit den daran gelagerten Führungen und Antrieben höheneinstellbar relativ zum Maschinentisch sein. Hierzu können von dem genannten Hubantrieb zum Absenken in die Transportstellung separate Stelltriebe vorgesehen sein. Vorzugsweise ist der Deckrahmen zusammen mit den daran gelagerten Antrieben und Führungen über an den Säulen vorgesehene Gewindespindeln höheneinstellbar, insbesondere an den Säulen verschieblich gelagert. Die Säulen können durch ein über dem Deckrahmen angeordnetes Joch miteinander verbunden sein. Das genannte Joch kann zusammen mit den Säulen und dem Deckrahmen in die genannte Transportstellung abgesenkt werden.

Gemäß einem weiteren vorteilhaften Aspekt der vorliegenden Erfindung ist vorgesehen, daß die am Deckrahmen gelagerten oberen Antriebsmittel derart ausgebildet sind, daß sie eine Verschiebung der Formbacken senkrecht zum Maschinentisch zulassen. Hierdurch wird erreicht, daß eine Wärmedehnung der Formbacken in Richtung senkrecht zum Maschinentisch im Betrieb ausgeglichen wird. Im Gegensatz zum Stand der Technik, sind die Formbacken nicht zwischen den Antriebsritzeln der unteren, im Maschinentisch angeordneten Antriebsmittel und der oberen am Deckrahmen gelagerten Antriebsmittel eingezwängt bzw. -gepaßt. Grundsätzlich könnte zum Ausgleich der Wärmedehnungen vorgesehen sein, daß die oberen Antriebsritzel in der Höhe verstellbar angeordnet sind. Insbesondere jedoch ist vorgesehen, daß die oberen Antriebsritzel um vertikale, zum Maschinentisch senkrechte Achsen umlaufen und die an den Formbacken vorgesehenen oberen Zahnstangen entsprechend vertikal angeordnet sind, so daß sich die formbackenseitigen Zahnstangen in vertikaler Richtung relativ zu den Antriebsritzeln verschieben können. Der Eingriff zwischen Antriebsritzel und Zahnstange wird dabei nicht verändert, ein ruckfreier und präziser Antrieb ist gewährleistet.

In Weiterbildung der Erfindung kann am Ende der Formstrecke eine Parkstation für Sonderformbacken wie Muffenformbacken und dergleichen vorgesehen sein. Die entsprechenden Sonderformbacken können dort geparkt und von dem Rückförderer nur dann in den Maschinentakt eingespeist werden, wenn dies gewünscht ist. Wenn die Sonderformbacken eingespeist werden, wird das entsprechende nicht verwendete Formbackenpaar auf der Parkstation abgestellt. Der Tausch läßt sich besonders einfach bewerkstelligen, da die Parkstation unmittelbar auf dem Maschinentisch am Ende der Formstrecke vorgesehen ist, so daß dies einfach im normalen Takt des Rückförderers erfolgen kann.

Ferner kann am Ende der Formstrecke eine Wechselstation zum Einspeisen neuer Formbacken und Ausspeisen alter Formbacken in den bzw. aus dem Formbackenkreislauf beim Umrüsten der Maschine vorgesehen sein. Vorzugsweise ist die Wechselstation separat vom Maschinentisch ausgebildet. Insbesondere kann die Wechselstation einen verfahrbaren Wechseltisch aufweisen, der in den und aus dem Arbeitsbereich des Rückförderers, vorzugsweise an das dem Spritzkopf abgewandte Ende des Maschinentischs der Formstreckeneinrichtung gefahren wer den kann. Hierzu können in der Bodenplatte Schienen quer zur Richtung der Formstrecke im Bereich deren Endes vorgesehen sein, auf denen der Wechseltisch verfahren werden kann. Die zu wechselnden Formbacken können mittels des Maschinentischs quer aus der Anlage herausgefahren und neue Formbacken wieder hineingefahren werden. Von dem eingefahrenen Wechseltisch nimmt der Rückförderer die Formbacken und speist sie am vorderen Ende der Formstrecke auf den Maschinentisch ein.

Nachfolgend wird die Erfindung anhand eines bevorzugten Ausführungsbeispieles und zugehöriger Zeichnungen näher erläutert. In den Zeichnungen zeigen:
- Fig. 1: eine Draufsicht auf eine Wellrohranlage nach einem bevorzugten Ausführungsbeispiel der vorliegenden Erfindung, die einen fest am Boden installierlen Portairoboter und eine auf Schienen verfahrbare Formstreckeneinrichtung mit Maschinentisch und daran befestigen Aufbauten zeigt,
- Fig. 2: eine Seitenansicht der Wellrohranlage aus Figur 1, wobei die mobile Formstreckeneinrichtung von einem Spritzkopf weggefahren ist,
- Fig. 3: eine Frontansicht der Formstreckeneinrichtung und des diese überspannenden Portalroboters von der Spritzkopfseite her, und
- Fig. 4: eine Frontansicht der Wellrohranlage ähnlich Figur 3, wobei die Anlage in zwei Konfigurationen mit unterschiedlichen Formbackengrößen dargestellt ist.

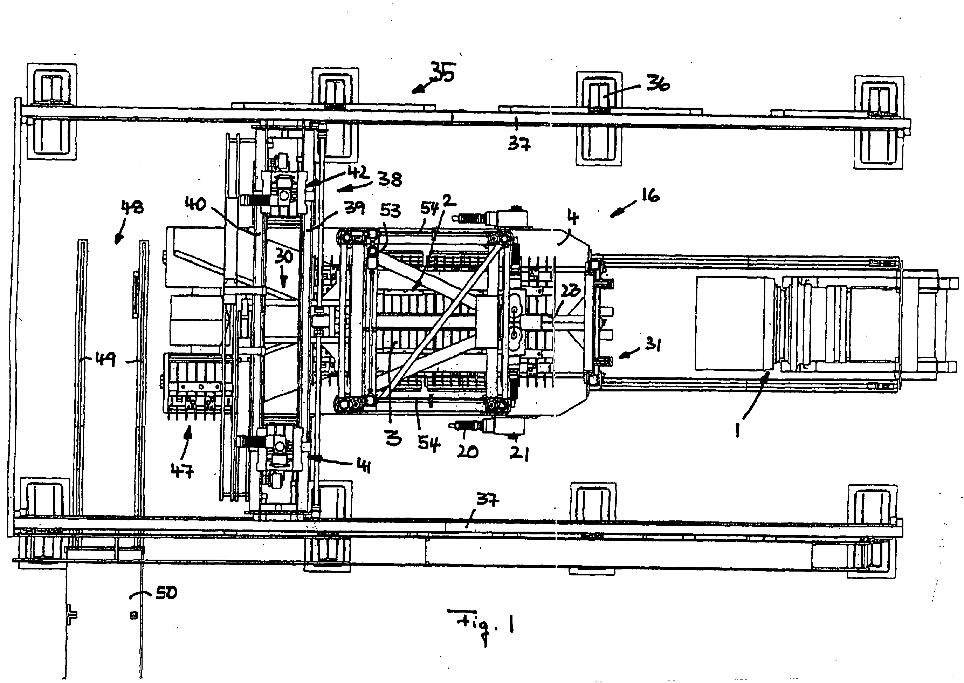

Figur 1 zeigt die einem Spritzkopf 1 nachgeschaltete Formstrecke 2, entlang derer ein aus dem Spritzkopf 1 austretender plastischer Kunststoffschiauch querprofiliert wird. Hierzu werden einander ergänzende Formbacken paarweise entlang der Formstrecke 2 auf dem Maschinentisch 4 geführt.

Der Maschinentisch 4 besitzt ein Fahrwerk 5, mit dem der Maschinentisch 4 auf in einer Bodenplatte 6 verankerten Schienen 7 verfahren werden kann. Wie Figur 1 zeigt, kann der Maschinentisch 4 in Arbeitsrichtung des Spritzkopfs 1 verfahren werden. Ein Verfahrantrieb für den Maschinentisch 4 kann grundsätzlich verschieden ausgebildet sein. Nach einer vorteilhaften Ausführung kann dies ein Kugelspindeltrieb sein. In Figur 1 ist der Maschinentisch 4 in seiner vom Spritzkopf 1 weggefahrenen Stellung gezeigt. Während des Betriebes ist der Maschinentisch 4 gemäß Figur 1 nach rechts verfahren, so daß die auf dem Maschinentisch 4 befindlichen Formbacken 3 zu dem Spritzkopf 1 eingefahren sind.

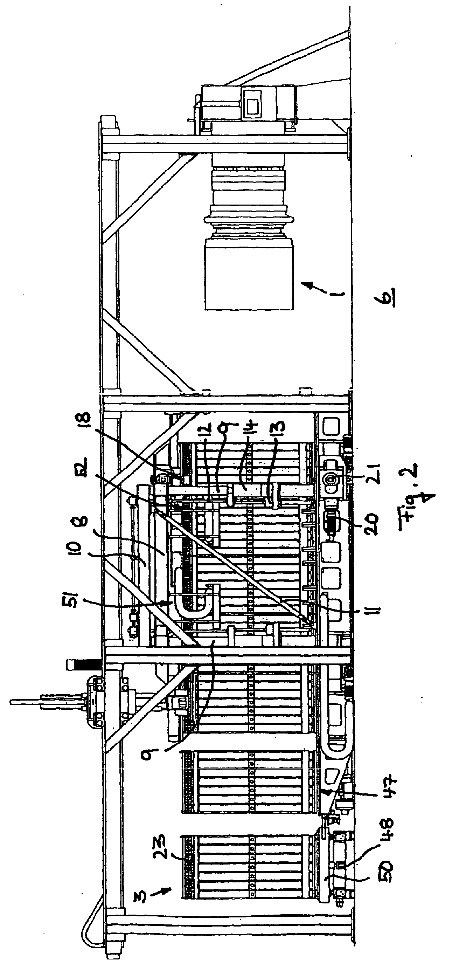

Über dem Maschinentisch 4 ist ein Deckrahmen 8 angeordnet. Wie die Figuren 1 und 2 zeigen, sind auf dem Maschinentisch 4 vier Säulen 9 verankert, an denen der Deckrahmen 8 verschieblich gelagert ist. Die Säulen 9 sind an ihrem oberen Ende durch ein Joch 10 miteinander verbunden. Das Joch 10 ist an den Säulen 9 starr befestigt. Zusätzlich ist das Joch 10 mittels zweier seitlich angeordneter, quer verlaufender Zuganker 11 am Maschinentisch 4 verankert, um Kräfte abzufangen, die von den am Deckrahmen 8 angeordneten oberen Antriebsmitteln, die noch erläutert werden, ausgeübt werden. Hierdurch wird eine Verwindung der Säulen 9 vermieden.

Wie Figur 2 zeigt, ist der Deckrahmen 8 an den Säulen 9 gleitend verschieblich gelagert. Er ist mittels vier Hubspindeln 12, die jeweils an den Säulen 9 angeordnet sind, abgestützt und höhenverstellbar. Der zugehörige Hubantrieb 53 ist auf der Oberseite des Jochs 10 angeordnet und über geeignete Getriebe auf die Hubspindeln geschaltet. Mittels Verbindungswellen 54 wird die Antriebsbewegung des Hubantriebs 53 synchron auf alle Hubspindeln übertragen (vgl. Figur 1).

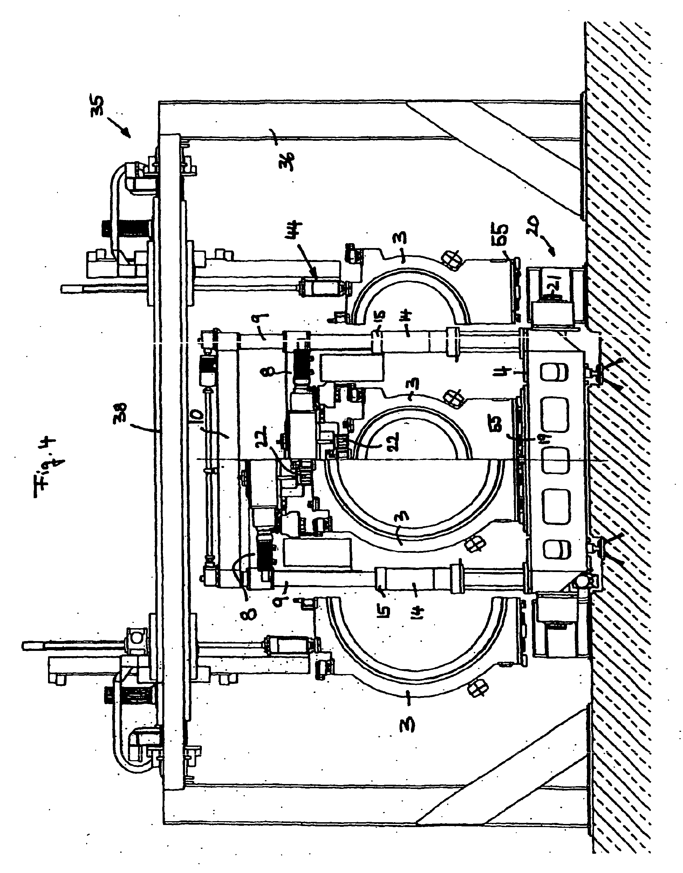

Dementsprechend kann der Deckrahmen relativ zu den Säulen 9 und relativ zum Joch 10 auf- und abgefahren werden, wie dies besonders Figur 4 verdeutlicht.

Zusätzlich kann der Deckrahmen 8 zusammen mit dem Joch 10 und der darauf angeordneten Aufbauten in eine Transportstellung zum Maschinentisch 4 hin abgesenkt werden. Wie Figur 2 zeigt, sind die Säulen 9 teleskopierbar ausgebildet. Mittels Teleskopierantrieben 13 in Form von Hubspindeln kann jede der Säulen 9 zusammenteleskopiert werden. Wie Figur 4 zeigt, sind in der ausgefahrenen Arbeitsstellung der Säulen 9 Stützmanschetten 14 um einen ausgefahrenen Teil der Säulen 9 gelegt. Die ausgefahrenen Säulen 9 können mit einem stufenförmigen Absatz 15, der gleichzeitig der Anlenkung der Hubspindeln dient, auf die Stützmanschetten 14 aufgefahren werden, so daß eine präzise und definierte Stellung der Säulen 9 im ausgefahrenen Zustand erreicht wird. Nach Entfernen der Stützmanschetten 14 kann der obere Teil der Säulen 9 abgesenkt werden, bis die stufenförmigen Absätze 15 auf den unteren Zylindern der Säulen 9 aufsitzen. Mit dieser zusätzlichen Absenkung in eine Transportstellung kann die insgesamte Höhe der Formstreckeneinrichtung, die insgesamt mit 16 bezeichnet ist, beträchtlich vermindert werden. Auch das starr an den Säulen) 9 befestigte Joch 10 mit den daran befindlichen Aufbauten wird entsprechend abgesenkt. Dies erleichtert den Transport der Formstreckeneinrichtung 16 beträchtlich. Vor einem Absenken des Jochs 10 sind die daran befestigten Zuganker 11 zu lösen.

Zum Vorschub der Formbacken 3 auf dem Maschinentisch 4 ist ein Hauptantrieb vorgesehen, der untere Antriebsmittel 17, die im Maschinentisch integriert sind, und obere Antriebsmittel 18 umfaßt, die am Deckrahmen 8 gelagert sind. Wie Figur 4 zeigt, besitzen die unteren Antriebsmittel 17 vier Antriebsritzel 19, die um jeweils horizontale Achsen quer zur Längsrichtung der Formstrecke 2 antreibbar sind. Die unteren Antriebsritzel 19 sind paarweise zusammengefaßt und werden von seitlich am Maschinentisch 4 angeordneten Antrieben 20 angetrieben. Die Antriebe 20 sind jeweils über eine Getriebestufe 21 mit einer Antriebswelle gekoppelt, auf denen die Antriebsritzel 19 sitzen bzw. ausgebildet sind. Vorzugsweise sind die Antriebe 20 vom Maschinentisch 4 abmontierbar, um dessen Gesamtbreite beim Transport verkleinem zu können.

Wie Figur 4 zeigt, besitzen die auf dem Maschinentisch 4 anzutreibenden Formbacken 2 an ihrer Unterseite jeweils zwei Zahnstangen 55, in die die unteren Antriebsritzel 19 eingreifen können.

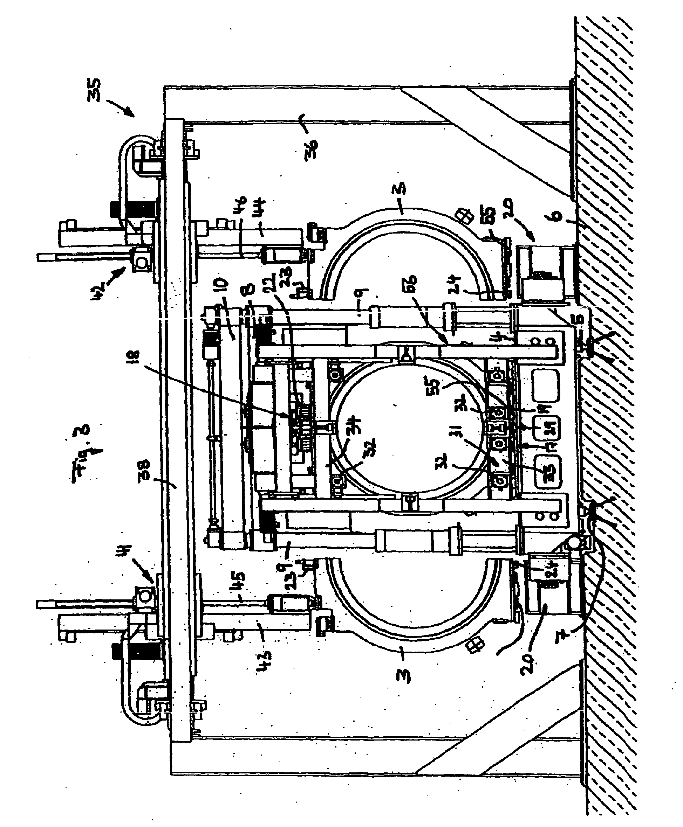

Wie Figur 3 zeigt, sitzen die unteren Antriebsmittel 17, wie auch die oberen Antriebsmittel 18, in der dem Spritzkopf 1 zugewandten Hälfte des Maschinentischs 4, der sich jedoch zum Spritzkopf hin über die Antriebsritzel hinaus erstreckt, so daß rückgeführte Formbacken vor den Antriebsritzeln auf dem Maschinentisch abgesetzt werden können, um sodann mit separaten Antriebsmitteln, wie noch erläutert wird, auf die Antriebsritzel 19 geschoben werden zu können.

Die oberen Antriebsmittel 18 am Deckrahmen 8 umfassen ein Paar voneinander beabstandeter obere Antriebsritzel 22, die um vertikale Drehachsen angetrieben werden können (vgl. Figur 4). Die oberen Antriebsritzel 22 können über entsprechende Antriebe und gegebenenfalls Getriebestufen angetrieben werden.

Die Formbacken 3 besitzen an ihren Oberseiten aufmontierte Zahnstangen 23, die in eine aufrechte Anordnung gekippt sind, so daß ihre Stirnseite dem Umfang der Antriebsritzel 22 zugewandt ist. Wie Figur 3 zeigt, sind die Zahnstangen 23 an der Oberseite der Formbacken 3 zur Außenseite hin orientiert, so daß sie bei sich paarweise ergänzenden Formbacken 3 zwischen den beiden Antriebsritzeln 22 hindurch laufen. Die von den Antriebsritzeln 22 ausgeübten Kräfte wirken damit auf die Formbacken 3 schließend. Die spezielle Anordnung der oberen Antriebsmittel 18 besitzt den großen Vorteil, daß Wärmedehnungen der Formbacken zugelassen und für den Antrieb unschädlich sind. Zwischen den Zahnstangen 23 und den oberen Antriebsritzein 22 kann in vertikaler Richtung ein gewisser Versatz auftreten, ohne daß dies den Vorschub der Formbacken 3 behindern würde.

Zur Führung der Formbacken entlang der Formstrecke 2 ist zum einen auf dem Maschinentisch 4 eine Führungsleiste 29 vorgesehen, die vorzugsweise ein T-förmiges Profil aufweisen kann. Die Formbacken 3 besitzen an ihrer Unterseite hinterschnittene Führungsvorsprünge 24, mit denen sie die Führungsleiste 29 auf dem Maschinentisch 4 untergreifen können. Hierdurch wird eine zusätzliche Sicherheit erreicht. Ferner können zusätzliche Führungsrollen am Maschinentisch vorgesehen sein.

An der Oberseite der Formbacken 3 ist ebenfalls eine Längsführung vorgesehen. Insbesondere können am Deckrahmen 8 und der Oberseite der Formbacken 3 Führungsrollen und eine zugehörige Führungsleiste vorgesehen sein.

Die Führungen am Maschinentisch 4 und am Deckrahmen 8 gabeln sich zum Ende der Formstrecke hin V-förmig, so daß die Formbacken am Ende der Formstrecke auseinandergedrückt und von dem Wellrohr abgehoben werden. Die V-förmige Gabelung 30 der Führungen auf dem Maschinentisch 4 ist in Figur 1 dargestellt.

Am vorderen, dem Spritzkopf 1 zugewandten Ende des Maschinentischs 4 sind Hilfsvorschubmittel 31 vorgesehen, die eine Einschubvorrichtung für rückgeführte Formbacken 3 bildet. Die rückgeführten Formbacken 3 werden am vorderen Ende des Maschinentischs 4 auf diesem abgesetzt, so daß sie noch nicht im Eingriff mit den Antriebsritzeln 19 bzw. 22 sind. Wie die Figuren 1 und 3 zeigen, sind Pneumatikzylinder 32 vorgesehen, deren Arbeitsrichtung parallel zu der Formstrecke 2 liegt. Die Pneumatikzylinder 32 sind am mit dem Maschinentisch 4 verbundenen Stimrahmen 56 angeordnet. Wie Figur 3 zeigt, sind an einem Querträger 33 des Stimrahmens, der am vorderen Ende des Maschinentischs 4 knapp über dessen Oberfläche angeordnet ist, vier Pneumatikzylinder 32 angeordnet. An einem oberen Querträger 34 des Stirnrahmens 56 sind zwei weitere Pneumatikzylinder 32 angeordnet. Bei Betätigung der Pneumatikzylinder 32 kann ein auf dem vorderen Ende des Maschinentischs 4 abgesetztes Formbackenpaar 3 an ein bereits auf der Formstrecke 2 befindliches, vorauseilendes Formbackenpaar aufgeschossen werden. Die Pneumatikzylinder 32 schieben hierzu das aufzuschließende Formbackenpaar gegen das vorauseilende Formbackenpaar. Die Pneumatikzylinder 32 wirken beim Aufschließen dämpfend und mindern einen möglichen Stoß zwischen dem nachgeschobenen und dem vorauseilenden Formbackenpaar.

Zur Rückförderung der am Ende der Formstrecke 2 befindlichen Formbacken 3 zum Anfang der Formstrecke 2 ist ein Portalroboter 35 vorgesehen, der fest auf der Bodenplatte 6 verankert ist und die Formstrecke 2 bzw. die Formstreckeneinrichtung 16 überspannt. Zu beiden Seiten der Formstrecke 2 sind jeweils entlang einer zur Formstrecke 2 parallelen Geraden eine Mehrzahl von Stützen 36 in der Bodenplatte 6 verankert. Auf den oberen Enden der Stützen 36 sitzen zwei zur Formstrecke 2 parallele Längsträger 37, auf denen ein die Formstrecke 2 überspannendes Portal 38 verfahrbar gelagert ist. Das Portal 38 ist eben ausgebildet. Wie Figur 1 zeigt, besteht das Portal 38 aus zwei Querträgern 39 und 40. Das Portal 38 ist in an sich bekannter Weise entlang des Längsträgern 37 gelagert und verfahrbar.

Auf dem Portal 38 sitzen zwei Querschlitten 41, 42, die auf dem Portal 38 gegenläufig verfahrbar sind. Die Querschlitten 41 und 42 können jeweils doppelt ausgebildet sein, so daß sie auf den Querträgern .39 und 40 sitzen. Jedem der Querschlitten 41 und 42 ist ein Schlittenantrieb 57, 58 zum Verfahren des Schlittens zugeordnet.

An jedem der Querschlitten 41 und 42 sitzt ein Greifarm 43, 44, der an dem jeweiligen Querschlitten höhenverstellbar gelagert ist. Jedem der Greifarme 43 und 44 ist ein Hubantrieb 45 und 46 zugeordnet, so daß die Greifarme 43 und 44 unabhängig von der Stellung des Schlittens senkrecht angehoben und abgesenkt werden können. Am Ende der Greifarme 43 und 44 sind vorzugsweise formschlüssig arbeitende Greifeinrichtungen vorgesehen, mit Hilfe derer Formbacken 3 an ihren Oberseiten, insbesondere an entsprechenden Bolzenköpfen, gegriffen werden können.

Mittels der Greifarme 43 und 44 greift der Portalroboter 35 ein Paar am Ende der Formstrecke 2 auseinandergefahrener Formbacken 3. Dies erfolgt vorzugsweise während der Auseinanderfahrbewegung der Formbacken 3 an der Gabelung 30. Zum Greifen der Formbacken durch den Portalroboter erfolgt ein zweiachsiges Aufsynchronisieren. Die Bewegung der Greifarme 43 und 44 werden sowohl in x-Richtung als auch in y-Richtung zur Bewegung der Formbacken synchronisiert. Die Greifarme des Portalroboters bewegen sich dabei also exakt entsprechend der Bewegung der Formbacken entlang der Gabelung 30. Zur Kompensation von Positionsungenauigkeiten der Formbacken z. B. in Folge von Wärmedehnungen sind in vorteilhafter Weise an den Greifarmen 43 und 44 Sensoren vorgesehen, die präzise die relative Position der Greifeinrichtungen an den Greifarmen zu den Formbacken, insbesondere deren Bolzenköpfe erfassen, insbesondere im letzten Abschnitt der Annäherung der Greifeinrichtungen an die Formbacken. Die mit den Sensoren verbundene Steuereinrichtung kann entsprechende Korrekturen der Bewegung der Greifarme veranlassen und Positionsungenauigkeiten der Formbacken in Folge von Wärmedehnungen und dergleichen kompensieren.

Die Formbacken 3 werden vom Portalroboter 35 vom Maschinentisch 4 abgehoben, seitlich am Maschinentisch 4 vorbei zurück zum Anfang der Formstrecke bewegt und am spritzkopfseitigen Ende des Maschinentischs 4 auf diesem wieder abgesetzt. Auf dem Maschinentisch abgesetzt, werden die Formbacken 3 von den Pneumatikzylindern 32 auf das vorauseilende Formbackenpaar aufgeschoben und in Eingriff mit den Antriebsritzein 19 und 22 gebracht.

Wie Figur 1 und Figur 2 zeigen, ist der Maschinentisch 4 nach hinten hin über den Formbackenentnahmebereich, in dem der Portalroboter 35 am Ende der Formstrecke die Formbacken 3 greift, hinaus verlängert. Er bildet an seinem dem Spritzkopf 1 abgewandten Ende eine Parkstation 47 für Sonderformbacken wie z. B. Muffenformbacken etc., die nur zu gegebener Zeit in den Formbackenkreislauf eingespeist werden müssen. Zum Einspeisen des auf der Parkstation 47 geparkten Formbackenpaares greift der Portalroboter 35 dieses und setzt es am vorderen Ende des Maschinentischs 4 ab. Das unterdessen am Ende der Formstrecke 2 auf dem Maschinentisch ausgeschobene Formbackenpaar fährt einfach entlang der sich gabelnden Führung 30 weiter auseinander und wird vom Portalroboter schließlich in der Parkstation 47 abgestellt. Vorteilhafterweise liegt die Parkstation unmittelbar auf dem Maschinentisch 4. Der Portalroboter greift sodann einfach das nächste Formbackenpaar 3, um dieses zurück an das spritzkopfseitige Ende des Maschinentischs zu fördern und dort abzusetzen. Durch die Anordnung der Parkstation auf dem Maschinentisch 4 vereinfacht sich das Ein- und Ausschleusen von Sonderformbacken beträchtlich. Der Portalroboter 35 erledigt das Ein- und Ausschleusen.

Wie Figur 1 zeigt, ist am rückwärtigen, dem Spritzkopf 1 abgewandten Ende der Anlage, eine Wechselstation 48 vorgesehen. In der Bodenplatte 6 sind quer verlaufende Schienen 49. verankert, auf denen ein Wechseltisch 50 ein- und ausfahrbar ist. In seiner in den Arbeitsbereich des Portalroboters 35 eingefahrenen Stellung liegt der Wechseltisch 50 etwa am Ende des Verfahrbereichs des Maschinentischs 4, wenn dieser von dem Spritzkopf 1 weggefahren ist. Mit Hilfe des Wechseltischs 50 können neue Formbacken zum Umrüsten der Maschine eingefahren werden. Vom Wechseltisch 50 nimmt der Portalroboter 35 jeweils eingefahrene Formbacken, um sie am dem Spritzkopf 1 zugewandten Ende des Maschinentischs 4 auf diesem abzusetzen. Zum Ausschleusen der alten Formbacken nimmt der Portalroboter 35 am Ende der Formstrecke 2 befindliche Formbacken und setzt sie auf den leeren Wechseltisch 50 ab. Der Wechseltisch 50 ist vorzugsweise so groß ausgebildet, daß zumindest ein Paar Formbacken darauf abgestellt werden kann.

Das Zusammenspiel zwischen dem Maschinentisch 4 bzw. der gesamten Formstreckeneinrichtung 16 und dem hiervon separaten Portalroboter 35 wird durch eine zentrale Steuereinrichtung gesteuert. Um zu wissen, in welcher Anordnung die Formstreckeneinrichtung 16 und der Portalroboter 35 relativ zueinander stehen, ist eine Positionserfassungseinrichtung vorgesehen. Der Maschinentisch 4 kann vorzugsweise mittels einer Kugelspindel entlang der im Boden verankerten Schienen 7 verfahren werden. Der Kugelspindel bzw. deren Antrieb ist ein Absolutwertgeber zugeordnet, der stets die Stellung des Maschinentischs 4 präzise angibt. Ferner besitzt die Positionseinrichtung einen Absolutwertgeber, der dem Antrieb des Portals 38 zugeordnet ist. Hieraus kann die Steuereinrichtung stets exakt die relative Stellung von Formstreckeneinrichtung und Portalroboter zueinander bestimmen. Insbesondere kann die Steuereinrichtung den Portalroboter 35 derart steuern, daß dieser die Formbacken 3 während deren Bewegung auf dem Maschinentisch 4 greift. Die Rückführung der Formbacken 3 erfolgt daher ohne jegiiche Unterbrechung des Vorgangs.

Wie Figur 2 zeigt, ist am oberen Deckrahmen 8 eine Kühlvorrichtung 51 bzw. deren Andockmittel 52 gelagert. Die Kühlvorrichtung 51 besitzt leckagefreie Kupplungen, die ein Ankuppeln der auf der Formstrecke 2 befindlichen Formbacken 3 an die Kühlvorrichtung 51 erlaubt. In den Formbacken 3 selbst sind Kühlmittelkanäle ausgebildet, so daß eine direkte Kühlung der Formbacken 3 möglich ist. Die Kühlvorrichtung 51 bzw. deren formbackenseitigen Anschlüsse fahren mit den Formbacken 3 bei deren Bewegung auf dem Maschinentisch 4 entlang der Formstrecke 2 über ein Stück der Wegstrecke mit, so daß während der Bewegung auf der Formstrecke 2 Kühlmittel durch die Formbacken 3 zirkuliert werden kann. Am Ende der Formstrecke 2 kuppeln die leckagefreien Kupplungen der Kühlvorrichtung 51 ab. Das Kühlmittel verbleibt in den Formbacken 3.

## Patentansprüche

1. Vorrichtung zur Herstellung von Wellrohren aus thermoplastischem Kunststoff, bei der in einem Kreislauf sich paarweise ergänzende Formbacken (3) gemeinsam entlang einer sich an einen Spritzkopf (1) anschließenden Formstrecke (2) geführt, am Ende der Formstrecke auseinandergefahren und separat voneinander zu deren Anfang zurückgeführt werden, mit einer Formstreckeneinrichtung (16) zur Bewegung der Formbacken entlang der Formstrecke und einen Rückförderer (35) zur Rückförderung der Formbacken (3) vom Ende der Formstrecke zu deren Anfang, wobei die Formstreckeneinrichtung (16) einen Maschinentisch (4) mit einer unteren Führung (29) und unteren Antriebsmitteln (17, 19) für die Formbacken (3) und einen am Maschinentisch befestigten Deckrahmen (8) mit einer oberen Führung und oberen Antriebsmitteln (18, 22) für die Formbacken aufweist, wobei die Formstreckeneinrichtung (16) und der Rückförderer (35) voneinander getrennte Einheiten bilden, und wobei als Rückförderer ein an einer Bodenplatte (6) verankerter Portalroboter (35) vorgesehen und die Formstreckeneinheit (16) eine auf der Bodenplatte (6) verfahrbare Einheit ist,
**dadurch gekennzeichnet, dass** am Anfang der Formstrecke (2) von dem Rückförderer (35) separate Einschubmittel (32) zum Aufschließen eines rückgeführten Formbackenpaares (3) an bereits auf der Formstrecke befindliche, vorauseilende Formbacken (3) vorgesehen sind.

2. Vorrichtung gemäß Patentanspruch 1, wobei die Einschubmittel (31) die an den Anfang der Formstrecke zurückgeführten Formbacken (3) von dem Rückförderer (35) übernehmen und an die vorauseilenden Formbacken (3) in Vorschubrichtung schieben können, um die zurückgeführten Formbacken (3) passgenau an die vorauseilenden Formbacken (3) aufzuschließen.

3. Vorrichtung gemäß Patentanspruch 1 oder 2, wobei der Rückförderer (35) die zurückgeführten Formbacken (35) am vorderen Ende des Maschinentischs (4) absetzen kann, so dass sie noch nicht im Eingriff mit den Antriebsmitteln (17, 19; 18, 22) sind.

4. Vorrichtung gemäß einem der vorhergehenden Patentansprüche, wobei eine Dämpfungseinrichtung zur Dämpfung der Vorschubbewegung durch die Einschuhmittel (32) beim Anstoßen der rückge führten Formbacken an die vorauseilenden Formbacken vorgesehen ist.

5. Vorrichtung gemäß einem der vorhergehenden Patentansprüche, wobei Einschubmittel von zumindest einem am Maschinentisch (4) gelagerten Pneumatikzylinder (32) gebildet sind.

6. Vorrichtung gemäß einem der vorhergehenden Patentansprüche, wobei die Formstreckeneinrichtung (16) und der Rückförderer (35) voneinander getrennte Einheiten bilden, wobei als Rückförderer ein an einer Bodenplatte (6) verankerter Portalroboter (35) vorgesehen und die Formstreckeneinheit (16) eine auf der Bodenplatte (6) verfahrbare Einheit ist.

7. Vorrichtung gemäß einem der vorhergehenden Patentansprüche, wobei eine Positionserfassungseinrichtung, insbesondere ein dem Maschinentisch (4) zugeordneter Absolutwertgeber, ein der entsprechenden Bewegungsachse des Portalroboters (35) zugeordneter Absolutwertgeber sowie ein den Antriebsmitteln zur Bewegung der Formbacken auf dem Maschinentisch zugeordneter Absolutwertgeber, zur Erfassung der Position des Maschinentisches (4) relativ zu dem Rückförderer (35), sowie eine mit der Positionserfassungseinrichtung verbundene zentrale Steuereinrichtung zur Ansteuerung der Formstreckeneinrichtung (16) und des Rückförderers (35) vorgesehen sind.

8. Vorrichtung gemäß einem der vorhergehenden Patentansprüche, wobei der Rückförderer ein Portalroboter (35) ist, der ein ebenes Portal (38), das sich quer über die Formstrecke (2) erstreckt und parallel zu dieser verfahrbar ist, ein Paar Schlitten (41, 42), die an dem Portal gelagert und an diesem gegensinnig zueinander verfahrbar sind, sowie ein Paar an den Schlitten (41, 42) gelagerte Greifeinrichtungen (43, 44) aufweist, wobei die Greifeinrichtungen vertikal verfahrbar, insbesondere mittels eines Hubantriebs (45, 46) senkrecht zur Ebene des Maschinentisches (4) relativ zu dem jeweiligen Schlitten verfahrbar sind.

## Claims

1. An apparatus for the manufacture of corrugated pipes from thermoplastic in which, within a closed loop, mould segment halves (3), which complement each other in pairs, are moved along a mould path (2) adjacent to an injection head (1), and which are moved apart at the end of the mould path and are returned to its start separately from one another, comprising a mould path device (16) to move the mould segment halves along the mould path and a return conveyor (35) to return the mould segment halves (3) from the end of the mould path to its start, with the mould path device (16) comprising a machine table (4) having a lower guide (29) and lower driving means (17, 19) for the mould segment halves (3) and a cover frame (8) secured to the machine table having a upper guide and upper driving means (18, 22) for the mould segment halves, wherein the mould path device (16) and the return conveyor (35) form units separated from one another, with a portal robot (35) anchored to a base plate (6) being provided as a return conveyor and the mould path device (16) being a unit travellable on the base plate (6), **characterized in that** insertion means (32) separate from the return conveyor (35) are provided at the start of the mould path (2) to move a returned mould segment half pairs (3) close up to preceding mould segment halves (3) located on the mould path.

2. An apparatus according to claim 1, **characterized in that** the insertion means (31) are able to take over the mould segment halves (3) being transported back at the start of the mould path from the return conveyor (35) and shift the mould segment halves (3) to the in travel direction preceding mould segment halves (3) to move close up the returned mould segment halves (3) fitting precisely to the preceding mould segment halves (3).

3. An apparatus according to claims 1 or 2, **characterized in that** the return conveyor (35) is able to deposit the returned mould segment halves (3) at the front end of the machine table (4), so that they are engaged with the driving means (17; 19; 18; 22).

4. An apparatus according to one of the preceding claims, **characterized in that** an absorption device to absorb the advance movement of the returned mould segment halves abut upon the preceding mould segment halves is provided by the insertion means (32).

5. An apparatus according to one of the preceding claims, **characterized in that** the insertion means are formed by at least one pneumatic cylinder (32) mounted at the machine table (4).

6. An apparatus according to one of the preceding claims, **characterized in that** the mould path device (16) and the return conveyor (35) form units separated from one another, with a portal robot (35) anchored to a base plate (6) being provided as a return conveyor and the mould path device (16) being a unit travellable on the base plate (6).

7. An apparatus according to one of the preceding claims, **characterized in that** there is provided a position detection device, in particular an absolute value transponder associated with the machine table (4), an absolute value transponder associated with the corresponding movement axle of the portal robot (35) and an absolute value transponder associated with the drive means for the movement of the mould segment halves on the machine table, for detection of the position of the machine table (4) relative to the return conveyor (35) and a central control device connected to the position detection device for the control of the mould path device (16) and of the return conveyor (35).

8. An apparatus according to one of the preceding claims, **characterized in that** the return conveyor is a portal robot (35) with a planar portal (38), which extends transversely over the mould path (2) and can be travelled parallel to this, a pair of carriages (41, 42), which are installed on the portal and can be travelled in opposite directions to one another on this, and a pair of gripping devices (43, 44) mounted on the carriages (41, 42), with the gripping devices being vertically travellable, in particular travellable by means of a lift drive (45, 46) perpendicular to the plane of the machine table (4) relative to the respective carriage.

## Revendications

1. Dispositif pour la fabrication de tubes ondulés en matière synthétique thermoplastique, dans lequel, durant un cycle, des mâchoires de moulage complémentaires par paires (3) sont guidées le long d'un trajet de moulage (2) se raccordant à une tête d'injection (1), à la fin du trajet de moulage sont écartées et ramenées séparément l'une de l'autre au début de celui-ci, avec un dispositif de trajet de moulage (16) pour déplacer les mâchoires de moulage le long du trajet de moulage et un convoyeur de retour (35) pour ramener les mâchoires de moulage (3) de la fin du trajet de moulage au début de celui-ci, le dispositif de trajet de moulage (16) comportant une table de machine (4) avec un guidage inférieur (29) et avec des moyens d'entraînement inférieurs (17, 19) pour les mâchoires de moulage (3) et un châssis haut (8) fixé à la table de machine avec un guidage supérieur et des moyens d'entraînement supérieurs (18, 22) pour les mâchoires de moulage, le dispositif de trajet de moulage (16) et le convoyeur de retour (35) formant des entités séparées l'une de l'autre, et le convoyeur de retour prévu étant un robot portique (35) scellé à un socle (6), et le module de trajet de moulage (16) étant un module déplaçable sur le socle (6), **caractérisé en ce qu'**au début du trajet de moulage (2) sont prévus des moyens de poussée (32) séparés du convoyeur de retour (35) pour rapprocher une paire de mâchoires de moulage (3) ramenée de mâchoires de moulage (3) précédentes se trouvant déjà sur le trajet de moulage.

2. Dispositif selon la revendication 1, les moyens de poussée (31) pouvant prendre en charge, sur le convoyeur de retour (35), les mâchoires de moulage (3) ramenées au début du trajet de moulage et les pousser dans la direction d'avance contre les mâchoires de moulage (3) précédentes afin de rapprocher les mâchoires de moulage (3) ramenées des mâchoires de moulage (3) précédentes avec un ajustement précis.

3. Dispositif selon la revendication 1 ou 2, le convoyeur de retour (35) pouvant déposer les mâchoires de moulage (3) ramenées à l'extrémité avant de la table de machine (4), de façon qu'elles ne soient pas encore en prise avec les moyens d'entraînement (17, 19 ; 18, 22).

4. Dispositif selon une des revendications précédentes, un dispositif d'amortissement étant prévu pour amortir le mouvement d'avance imposé par les moyens de poussée (32) lors du contact des mâchoires de moulage ramenées avec les mâchoires de moulage précédentes.

5. Dispositif selon une des revendications précédentes, les moyens de poussée étant formés par au moins un vérin pneumatique (32) monté sur la table de machine (4).

6. Dispositif selon une des revendications précédentes, le dispositif de trajet de moulage (16) et le convoyeur de retour (35) formant des entités séparées l'une de l'autre, le convoyeur de retour prévu étant un robot portique (35) scellé à un socle (6), et le module de trajet de moulage (16) étant un module déplaçable sur le socle (6).

7. Dispositif selon une des revendications précédentes, un dispositif de détection de position, en particulier un indicateur de valeur absolue associé à la table de machine (4), un indicateur de valeur absolue associé à l'axe de déplacement correspondant du robot portique (35) ainsi qu'un indicateur de valeur absolue associé aux moyens d'entraînement chargés du déplacement des mâchoires de moulage sur la table de machine, pour détecter la position de la table de machine (4) par rapport au convoyeur de retour (35), ainsi qu'un dispositif central de commande connecté au dispositif de détection de position pour commander le dispositif de trajet de moulage (16) et le convoyeur de retour (35) étant prévus.

8. Dispositif selon une des revendications précédentes, le convoyeur de retour étant un robot portique (35) qui comporte un portique plan (38), lequel s'étend transversalement au-dessus du trajet de moulage (2) et peut se déplacer parallèlement à celui-ci, une paire de chariots (41, 42), qui sont montés sur le portique et peuvent se déplacer sur celui-ci dans des directions opposées l'une à l'autre, ainsi qu'une paire de dispositifs preneurs (43, 44) montés sur les chariots (41, 42), les dispositifs preneurs étant déplaçables verticalement, en particulier déplaçables perpendiculairement au plan de la table de machine (4) par rapport au chariot correspondant au moyen d'une commande de levage (45, 46).
